# EUROPEAN PATENT APPLICATION

(11) **EP 1 059 529 A1**
(43) Date of publication of application: **13.12.2000**
(21) Application number: 99111175.8
(22) Date of filing: 09.06.1999
(51) Int. Cl.: G01N 27/447

(54) **Reversibly fixed gels for gel electrophoresis**

(71) Applicant: Nordheim, Alfred, Prof. Dr., 72135 Dettenhausen (DE); Cahill, Michael, Dr., 72116 Moessingen (DE)
(72) Inventor: Nordheim, Alfred, Prof. Dr., 72135 Dettenhausen (DE); Cahill, Michael, Dr., 72116 Moessingen (DE)
(74) Representative: Patentanwälte Ruff, Beier und Partner

(57) **Abstract**

The invention relates to a method and device for separation of mixtures of molecules, especially mixtures of peptides and/or proteins, into components by gel electrophoresis in which the gel is reversibly coupled to a support, especially a support film. Preferably the gel is a polyacrylamide gel. Following the electrophoretic separation the gel, especially defined regions of the gel, is detached from the support by decoupling covalent bondings between gel and support. Then the gel, especially the defined regions, is removed in order to perform further analysis. In a particular embodiment of the invention the gel is an ultra thin gel of large dimensions. The inventive method is excellently suited for automatisation, high throughput and high resolution protein analysis.

## Description

The invention relates to a method and device for separation of mixtures of molecules, especially mixtures of biological molecules, into components by gel electrophoresis, wherein a gel is used, especially a polyacrylamide gel, which is reversibly coupled to a support by covalent bonding. Furthermore the invention relates to ultra thin gels of large dimensions.

The use of electrophoresis for preparative and analytical purposes is an established technique and several types of electrophoretic apparatus exist for preparative and analytical purposes. These apparatus and their accompanying principles can be divided into three categories for the purposes required here (1, 19).
a) zone electrophoresis
b) isotachophoresis
c) isoelectric focussing

Zone electrophoresis includes the glycine and tricine buffered protein gel systems (12, 16) which are commonly used in the study of proteins known as proteomics.

Isotachophoresis utilises hydrophilic matrices, and typically exhibits high resolution, but low loading capacities. In combination with Free Flow electrophoresis the method can be used for micropreparative purposes (18).

Isoelectric focussing has been performed in either liquid density gradients, in gel gradients (14), or in multicompartment apparatus with isoelectric immobiline based separating gel medium (15).

In the field of protein biochemistry, proteomics has recently been of considerable interest. It is the study of all proteins expressed by a genome of the cells under study. The acronym "PROTEOME" means PROTEins expressed by a genOME (17). Proteomics may eventually reveal the identity and regulation of most proteins expressed within a particular cell-type (20). However the sensitivity and resolution currently attainable require improvement before this can be accomplished.

One of the most important limitations currently faced by proteomics studies is the extreme complexity of the protein complement of biological systems.

One problem is that the two dimensional polyacrylamide gel electrophoresis (2D-PAGE) gels currently used for proteomic research can usually resolve in the range of 2,000 to 10,000 proteins per gel (4, 5, 8, 10). It is thought that the human genome encodes between 65,000 and 100,000 genes (2), and between 5,000 - 15,000 genes are probably expressed in any single cell-type. If it is assumed that after multiply spliced mRNAs and post translational expressed modifications there may be in the order of 8 spots per gene (in yeast the number is 4.5), the number of different 2D-PAGE spots to be expected from the proteome of one cell may be conservatively estimated at around 50,000. Accordingly, even when up to 10,000 spots are seen on one 2D-PAGE gel, the majority are housekeeping proteins (8).

It is conceivable that the dynamic range of protein abundances within cells could be as high as 10⁷. Perhaps just a few molecules of some proteins, such as telomerase, are required per cell to provide biological function, whereas upwards of twenty million molecules exist of other proteins which constitute 1% total protein. Therefore an ideal separation system must be capable of handling a dynamic range of 7 orders of magnitude or more, and should deliver well over 50,000 separation windows.

If 50,000 spots were uniformly distributed on a 20 cm x 20 cm gel and the spots occupied an average of 2 mm², they would be present at 5 spots per 2 mm². Since the distribution of proteins over molecular weight and isoelectric points actually resemble skewed curves (3), it is obvious that certain regions of the gel are hopelessly overcrowded with poorly resolved low abundance protein spots. This problem may be partially solved by the use of narrower range pH gradients in isoelectric focussing, however this strategy does not address the linear dynamics issue, and exacerbates the throughput problem.

Solutions to the above problems could be provided by increasing the number of resolution windows of the separation system. In 2D-PAGE, this could be accomplished by decreasing spot size, by increasing the gel dimensions, or both.

It has been documented that horizontal pre-cast SDS-PAGE gels provide comparatively better resolution than vertical SDS-PAGE gels (6). The reason is that vertical gels are surrounded by glass walls, and thus heat produced by the electrophoretic process is not dissipated as effectively out of the gel. Further gels, especially horizontal gels can be attached to support films, of e.g. cellophane or polyester.

Thus if the protein should be later eluted from the gel, the support film must be first physically removed. There is a commercial device available for this purpose, which effectively consists of a piece of wire which slices the gel from the surface of the film. After this process the gel is fragile and easily changes shape. This is inconsistent with e.g. radioactive detection of proteins of interest, followed by transfer to a workstation and software-directed automatic excision of protein-containing gel regions by a robotics system.

One theoretically possible method of increasing resolution capacity of 2D-PAGE gels would be to increase the dimensions of the gel. With the present technology this has the disadvantage that the large gel is difficult to handle, it tears or rips easily due to large shear forces, and easily changes shape, as described above. This prevents people from using large and also very thin gels. Indeed laboratories which perform 2D-PAGE with larger gel formats actually cut the isoelectric focussing gel in half and perform the second dimension on gels of half the size (10) for precisely these reasons.

The invention facilitates the object to provide a method and device to permit a high resolution electrophoretic separation of molecules with subsequent isolation of distinct molecules, whereby the above mentioned disadvantages are circumvented. This object is solved by a method according to claim 1. Preferred embodiments of the inventive method are claimed in the dependent claims 2 to 12. A device, a support film and a gel, especially useful to perform the inventive method, are described in the following claims 13 to 18. The wording of all claims is hereby made to the content of the description by reference.

The inventive method involves the use of reversible covalent bondings connecting a gel, especially a polyacrylamide gel, to a support. Such linkages are used to render the contact to the support reversible. Preferably the gel is attached to the support through acrylamido groups which are fixed on the support and which become covalently incorporated into the gel matrix during polymerisation or solidification. This support provides mechanical strength and fixed dimensions which are advantageous for subsequent processing. The invention involves the electrophoretic separation of the mixture, wherein the mixture comprises preferably biological molecules as peptides and/or proteins. Subsequent to separation the molecules can be visualised, especially by staining and/or autoradiography, in order to analyse the separation pattern and to identify molecules of interest, i.e. defined regions of the gel, which are to be subjected to further analysis. Then the bondings between gel and support, especially between said defined regions of the gel and support, are at least partially decoupled in order to detach the gel at least partially from the support. In the next step the gel is removed, especially the defined regions. This is performed by e.g. simply stamping out the regions of interest. Due to the decoupling of the gel in the former step, the removing is very easy to perform.

Due to the sensitivity of analytes, especially peptides and/or proteins, the conditions for decoupling have to be chosen in that way, that analytes are not destroyed or modified in an unacceptable manner in regard to further analysis.

Subsequent to electrophoretic separation the gel is optionally dried in order to permit an easy handling of the gel. This is especially preferred in the case of radioactively labelled analytes in connection with autoradiography or phosphorimaging.

In a preferred embodiment of the invention the gel is a polyacrylamide gel, i.e. the gel matrix comprises acrylamide and bisacrylamide as crosslinker. Nevertheless, the invention is not restricted to polyacrylamide matrices. The gel matrix could also consist of chemically modified acrylamide-like molecules, or any other suitable polymeric molecules.

The support of the gel is formed by any suitable material, e.g. glass, plastic, metal or another polyacrylamide gel. It could be any solid, malleable, or flexible object or medium, to which acrylamide-like molecules can be attached to function in the inventive manner. In a preferred embodiment of the invention the support is a so-called support film from plastic material like polyester.

The mixtures of molecules to be separated by the inventive method are preferably mixtures of peptides and/or proteins, especially in the field of Proteomics. Nevertheless, the invention is not restricted to that kind of molecules. Modified proteins like glycoproteins or other molecules like nucleic acids or lipids are also included.

The connection between support and gel is realized by covalent bondings between support and gel. This is preferably obtained by molecules as linkers, which are fixed to the support and which form covalent bondings with the gel matrix, especially during polymerisation of the gel. In order to permit decoupling of the gel form the support these molecules possess cleavable linkages such as photolabile bonds, periodate cleavable bonds, pH reversible bonds, oxidation labile bonds, enzymatically cleavable bonds, cyanogen bromide cleavable bonds, or other chemical linkages. Especially preferred is the use of disulfide bonds because of their compatibility with the chemistry involved in in-gel digestion of proteins from a polyacrylamide gel piece, according to prior-art techniques.

With respect to e.g. pH labile bonds the sensitivity of the analytes has to be kept in mind. Conditions for decoupling of linkages should not be too extreme in order not to alter or destroy the molecules of interest. This would prevent further analysis of the molecules of interest. Therefore the use of linkers like gamma-methacryl-oxypropyltrimethoxysilane, which are hydrolysable at extreme basic pH, are not included by the invention, because conditions for decoupling would be too harsh and would not be suitable for the purpose of the invention under normal circumstances.

The molecules providing the connection between support and gel are preferably acrylamide-like molecules. By "acrylamide-like" molecule is meant for example, but not intended to be restricted thereto, an acrylamido molecule or methacryl molecule which shares the reactive double bond structure similar to acrylamide, as commonly possessed by acrylamido buffers (14), but which may possess any conceivable variable side chain. The molecules useful as linkers comprise any acrylamide-like molecules, e.g. amino alkyl acrylamides, oxy-alkyl acrylic acids, gamma-methacrylamido-N-alkyl molecules and gamma-methacryl-oxy-alkyl molecules. Further examples of the diversity possible can be found in the following references (7, 13, 14).

The gel, especially a 2D-PAGE gel, containing e.g. proteins which have been e.g. radioactively labelled, can be optionally dried and the positions of proteins identified. In order to remove proteins of interest a buffer is applied, which rehydrates (possibly under swelling) defined regions of the gel. Then the cleavable linkages between support and gel in this region are decoupled by physical and/or chemical treatment. If the linkers possess photolabile bonds, these linkages could be decoupled by exposing to an appropriate light dosage. In the case the linkers possess bonds, which are sensitive to e.g. reducing agents or to a special pH, these linkages are decoupled by controlled application of a solution, e.g. a buffer, containing the suitable reagent or providing the required pH conditions. The buffer providing said special requirements and the buffer, which rehydrates the gel in the case of former drying of the gel, could be the same. Thus, preferably rehydration and decoupling are done in one step by application of one buffer solution. The defined fragments of the gel, which are detached from the support in this manner, are physically removed, e.g. by cutting, and are subjected to further analysis.

In a preferred embodiment of the invention proteins/peptides are removed by application of a buffer containing reducing agent (e.g. tributyl phoshine or dithiothreitol) to cleave disulfide bonds. The buffer enters the gel by imbibition and linkages are decoupled, producing a small and defined region of rehydrated gel which is not covalently attached to the underlying support.

Preferably the solution or buffer contains further agents, especially enzymes, to digest the proteins of interest into peptides allowing subsequent removal and/or analysis of the peptides. The immediate digestion of proteins is preferred, because this procedure economizes time, reagents and volume of the sample and is suited for e.g. subsequent sequencing of the resulting peptides.

In one particular embodiment of the invention application of buffer is controlled by use of piezo-electrics, or simple pipetting. This gel piece is then excised from the gel either manually or robotically, and could be then subjected to a variety of further analyses such as enzymatic digestion of proteins, chemical cleavage of proteins, micro blotting onto a membrane, etc. The whole process or parts of it is preferably performed by robotic means.

In one embodiment of the invention the gel is partly coupled to the support by covalent bondings in a e.g. grid-like or a random pattern. This is achieved by the use of a partial coverage of the surface of the support, especially the support film, as defined above, in a grid-like or a random pattern, with acrylamido molecules which have covalent bondings which are either non-reversible or reversible as described above, such that after polymerisation of a polyacrylamide gel only portions of the gel are (reversibly) covalently attached to the support film, permitting convenient removal of certain portions of the gel. Such gels offer the advantages of structural/mechanical strength and convenience of handling, combined with the ability to conveniently remove small desired parts of the polyacrylamide gel from the support. The simplest extension of this principle is to dilute the acrylamido molecules, i.e. to apply them more sparingly, from a situation where the covalent bonding is strong enough to preclude convenient, e.g. automated, excision of certain gel pieces as is the case with prior art polyacrylamide support films, to a concentration such that the overall attachment of the polyacrylamide gel to the support is weak enough to permit physical separation of the gel from the support.

In an especially preferred embodiment of the invention the electrophoretic separation of molecules it thermoregulated. Therefore the inventive method and device for separation of mixtures of molecules, especially mixtures of biological molecules, into components by gel electrophoresis is characterized by extremely efficient heat dissipation and temperature control during electrophoresis. Temperature control is provided by a thermoregulatory device. In one preferred embodiment the support, preferably its entire area, is in direct contact with a cooling element. This is typically a ceramic water-cooled block, but could as effectively be an electronic device cooled by the effect of Peltier (11) or a thermoregulatory device according to another principle. The end result of this effective cooling is that the gel temperature is better regulated, Brownian motion of the analyte molecules is reduced, and thus diffusion-related increases in spot size are minimised.

Due to the high spatial resolution achieved by efficient cooling and/or the use of ultra-thin and/or very large gels and/or the precisely controlled application of microvolumes of buffer, the volume of the reaction is minimised. This results in higher concentration of proteins, and therefore in a better specific signal to contamination ratio, since most contaminants originate from impurities in the reagents and fluids employed.

Furthermore, excellent polymerisation of acrylamide can be obtained by application of heat to the polymerising gel via the thermoregulatory device, thus ensuring reproducible electrophoretic results. This is manifest not only by an ability to increase temperature to achieve optimal polymerisation, but also by an ability to reduce temperature to retard polymerisation for a desired length of time, which can be advantageous when polymerising a gel which contains e.g. a concentration gradient of glycerol.

In a particular preferred embodiment of the inventive method large format polyacrylamide gels are used. These gels are prepared and electrophoresed on a support film. By large format is meant a surface area of more than 800 cm², however the claims of this disclosure are not restricted to large format gels. In a preferred embodiment of the invention the gel has a dimension (surface area) of 20 cm x 50 cm. More preferred are dimensions of e.g. 50 cm x 50 cm.

Additionally to gels of large dimensions ultra thin gels are included by the invention. In special embodiments of the invention the gel has a gel thickness of less than 1 mm, especially less than 0.3 mm and more especially between 0.1 mm and 0.25 mm. Advantageously, the use of ultra thin gels results in a higher concentration of proteins. This leads to a better specific signal to contamination ratio, i.e. the visualization is more sensitive. Thus, the inventive ultra thin gels are especially suited for application of small amounts of analyte molecules.

The inventive method is characterized by operation over a large variety of physical dimensions. In preferred embodiments the gel dimensions are between 30 mm x 30 mm x 0.05 mm and 200 mm x 200 mm x 1.5 mm, but especially employing a gel thickness of 0.1 mm - 0.25 mm, or between 200 mm x 200 mm x 0.05 mm, and 2000 mm x 2000 mm x 1.5 mm, but especially employing a gel thickness of 0.1 mm - 0.25 mm, or the gel dimensions are greater than 2000 mm x 2000 mm x 1.5 mm, but especially employing a gel thickness of 0.1 mm - 0.25 mm. Large physical dimensions provide additional resolving power. The particular combination of large format SDS-PAGE gels as described above, and gel thickness of less than 1 mm is also claimed as outlined according to principles here disclosed. Thus analyte molecules within the gel are electrophoretically separated with exquisite resolution, and are recoverable for subsequent analyses in extremely small volumes and with extremely high purity.

In one particular embodiment of the invention the gel thickness of the comparatively or extremely large gel surface areas is maintained constant by inclusion of small beads of desired radius, e.g. metallic beads, as spacer objects in a grid-like pattern or with a random distribution throughout the gels, e.g. 0.05 mm diameter for a 0.05 mm gel. For large gels the volume of the beads is negligible, and their effect on the electric field is minimal. The worst result could be that certain narrow regions of the 2D-pattern after electrophoresis are distorted by small vertical aberrations, but this effect is observed only over a negligible proportion of the gel. This inventive method is disclosed hereby. Obviously the spacer objects could be made of different materials, and need not be spherical. The invention comprises these polyacrylamide gels, especially large and ultra thin gels, with or without reversible connection to support films, but specifically polymerised containing said spacer objects to maintain gel dimensions for any type of gel electrophoresis, but especially for horizontal gel electrophoresis.

The use of support films provides two advantages. Firstly, it permits efficient cooling during electrophoresis, thus reducing diffusion-related increases in protein spot size. Secondly, it provides mechanical support for the large gel. The gel itself can thus be ultra thin, such as 0.2 mm or less. Thus the invention is especially based on large format, ultra thin polyacrylamide protein gels. By convenient methods the extraction of proteins from such a gel would be extremely difficult and inconvenient. The inventive use of reversible covalent bondings described above permits a very convenient and reliable handling of such gels and optimises the two dimensional polyacrylamide gel electrophoresis (2D-PAGE) system for proteomics analysis.

In one embodiment of the invention the gel is divided into a stacking gel and a separation gel according to the method of Laemmli (12). The stacking gel forms the upper part of the gel where the sample is applied. The separation gel forms the lower part referred to the running direction of the analyte molecules. This gel can be used as the second dimension of 2D-PAGE. The analyte molecules, such as proteins or peptides, are loaded by application of an isoelectric focussing gel onto said stacking gel, or are loaded by application of any other separation technique, so as to produce a two dimensional distribution of analyte molecules after electrophoresis through the inventive device.

In a preferred embodiment the analyte molecules are loaded into well-like cavities in the stacking gel or onto the surface of the stacking gel, and are electrophoresed in one or more one dimensional lanes to produce bands perpendicular to the direction of electrophoresis. This includes any method whereby proteins are applied to the stacking gel so as to be separated by apparent molecular weight, e.g. whereby proteins are loaded in buffer applied to paper strips, etc., or have been previously separated.

Following electrophoresis the gel on its support can be dried, e.g. by a flow of filtered warm air. Analysis of the gel is possible e.g. by autoradiography, phosphorimager exposure, Multiple Photon Detection analysis, or stained and/or visualised by some other suitable method of protein detection, such as fluorescence.

Subsequent to protein 2D-pattern analysis, selected proteins are isolated according to the inventive method. One preferred method to characterize the isolated protein is protein identification by mass spectrometry. The sensitivity for mass spectrometry is additionally improved in connection with the volume reduction of the inventive method, as mass spectrometers are concentration dependent detectors. Also very often the signal is obscured by background signals. The background comes largely from contaminants in the reagents used. Therefore by increasing the concentration of protein relative to the gel matrix, the signal to noise ratio is improved, and sensitivity is increased.

At very low protein concentrations the enzymatic hydrolysis of proteins can be problematic since the concentration of proteins is below the kₘ of the particular desired protease(s). Chemical cleavage of proteins, such as cleavage after methionine with cyanogen bromide, or cleavage after tryptophan by oxidative halogenation (9) are intramolecular events which are independent of protein concentration. Use of chemical protein cleavage methods in the ultra thin gel pieces to generate peptides for mass analysis are therefore especially preferred.

Since the gel pieces are preferably of small thickness, small molecules such as matrix molecules for matrix assisted laser desorption ionisation time of flight (MALDI-TOF) mass spectrometers can be efficiently infused directly into the gel pieces, e.g. after proteolysis, and gel pieces or parts thereof can be then fired upon directly by a MALDI-TOF laser after appropriate dehydration. The prior-art MALDI-TOF technology is based on the so-called matrix molecules or porous silicon, which surround the peptide of interest. Due to the laser energy the matrix molecules are ionisied. They leave their substrate, normally a membrane, together with the peptide or interest and are subjected to mass spectrometry. Thus, the peptide can be analysed without further extraction from the substrate. Prior art technology needs blotting of the proteins onto a membrane as substrate, digestion of the proteins to peptides, incubation with matrix molecules and dehydration, before MALDI-TOF laser is applied. These inconvenient multi-step procedure, especially the blotting of proteins, is circumvented by the use of the inventive ultra-thin gels. By employment of these gels the proteins of interest can be digested and incubated with the matrix-molecules in the gel before the MALDI-TOF laser is applied. The inconvenient and time-consuming blotting is not necessary and can be omitted.

Besides this use also claimed is the microdissection, pulverisation or any subfragmentation of larger gel pieces into small enough dimensions to enable this described process.

The invention further comprises devices suitable to perform the inventive method. Such a device is characterized by a gel and a support, wherein gel and support are reversibly coupled to each other by covalent bonding. In one embodiment the support is in contact with a thermoregulatory device, preferably the entire area of the support. Especially preferred is the employment of a Peltier element. Advantageously, the device is intended to be a part of an automated system, wherein the automated system is preferably used to apply buffer and/or to remove defined regions of the gel.

The invention further comprises a gel support and a gel support film, especially but not restricted to use in combination with devices described above, whereby the gel matrix, especially a polyacrylamide matrix, is covalently attached to the support film through decouplable acrylamide-like molecules as linkers. These linkers possess cleavable linkages such as photolabile bonds, periodate cleavable bonds, pH reversible bonds, oxidation labile bonds, enzymatically cleavable bonds, or other chemical linkages. Especially useful is the use of disulfide bonds because of their compatibility with the chemistry involved in in-gel digestion of proteins from a polyacrylamide gel piece. Additionally claimed in this respect is the use of a partial coverage of the surface of a support or a support film, as defined above, in a grid-like or random pattern, with acrylamide-like molecules which have covalent bonds which are either non-reversible or reversible, such that after polymerisation of a polyacrylamide gel only portions of the gel will be covalently attached to the support film.

The inventive method could be used after a variety of prior art protein separation techniques have been applied. By way of example, proteins may be separated on the basis of isoelectric point (e.g. by chromatofocussing or isoelectric focussing), of electrophoretic mobility (e.g. by non-denaturing electrophoresis or by electrophoresis in the presence of a denaturing agent), by chromatography, including FPLC and HPLC, on any suitable matrix (e.g. gel filtration chromatography, ion exchange chromatography, reverse phase chromatography or affinity chromatography) or by centrifugation. In a preferred embodiment the analytes are separated by isoelectric focussing in a polyacrylamide strip gel provided with appropriate electrolytes as the first step of a two dimensional separation strategy.

The inventive method and devices are extremely useful in the field of 2D-PAGE and in proteomic analysis. For instance the inventive method and devices can be used as the second dimension of a two dimensional electrophoresis or they can be used as the final step of a multidimensional fractionation strategy. Furthermore, they can be used in horizontal or vertical gel electrophoresis and are excellently suited to robotic automatisation and for high throughput of high resolution protein analysis, which is a particular preferred embodiment of the invention.

In the following the invention is further explained by way of example by reference to the Figures 1 to 3.
Figure 1: Front view of one embodiment of the inventive device.
Figure 2: Side view of the inventive device of Fig. 1.
Figure 3: Top view of the inventive device of Fig. 1.

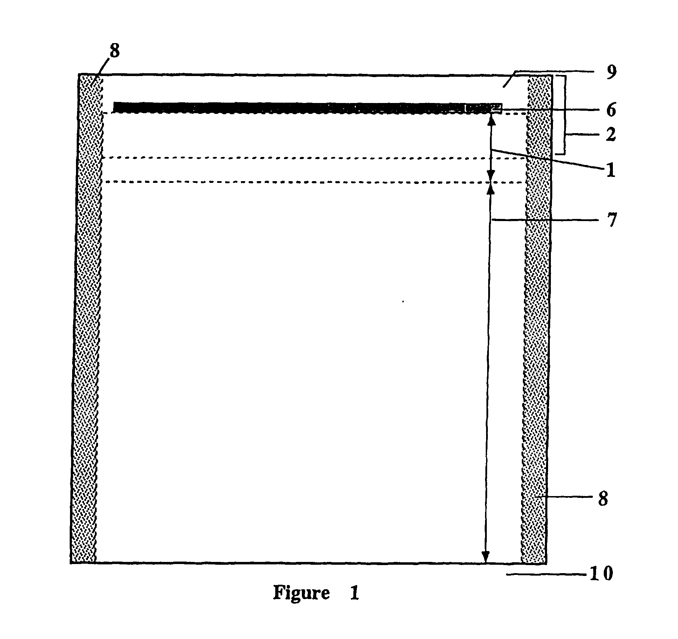

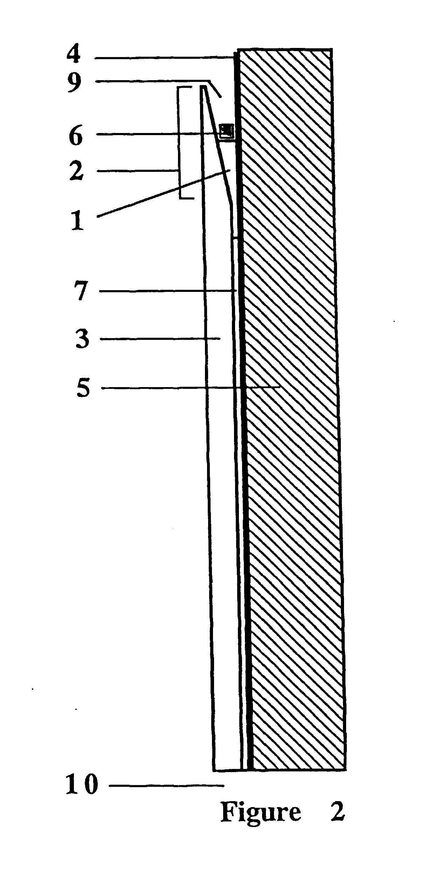

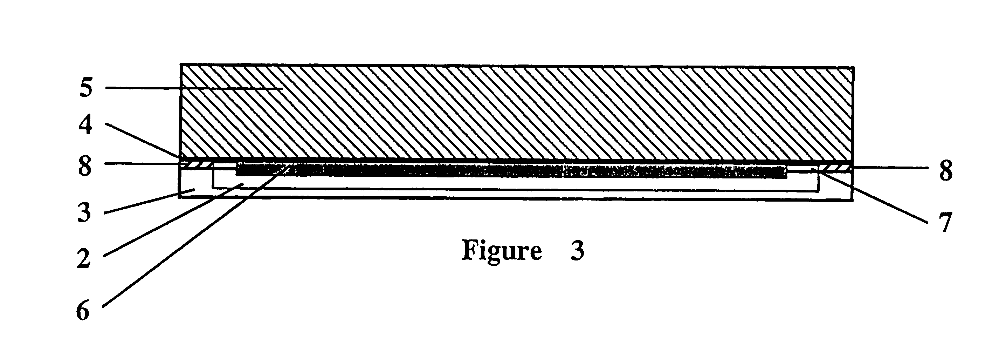

One embodiment of the inventive gel system for electrophoresis is given in Figures 1, 2 and 3, however the invention is not restricted to this example, or indeed to conventional 2D-PAGE. A vertical SDS-PAGE apparatus is disclosed, employing an ultra thin second dimension polyacryamide gel (or gel produced with recognisably similar polymerisation chemistry) buffered with e.g. glycine (12) or Tricine (16). The stacking gel 1 is poured into a wedge-like cavity 2 in the gel chamber, which is formed by a specifically machined glass or ceramic plate 3 which forms one wall of the electrophoresis chamber. Said plate could also be made of other material. The wedge reduces the gel thickness from e.g. 4 mm to 0.5 mm or less. The other wall of the electrophoresis chamber is formed by the support film 4, which backs directly onto a device 5 which is thermoregulated e.g. by the effect of Peltier, by water circulation, or by other means. Upon the polymerised stacking gel 1 is placed the pre-focussed first dimension isoelectric focussing (IEF) gel 6, which can be of either the immobilised pH gradient or carrier ampholyte type (14). During electrophoresis the analyte molecules electrophoretically exit the IEF gel 6 and enter the stacking gel 1. The wedge-like nature of this gel ("V" profile) results in concentration of the sample into a much smaller volume than conventionally possible, and this dimension is maintained into the separating gel 7. The proximity to the e.g. Peltier cooled surface provides extremely efficient cooling, thus reducing diffusion-related increases in spot size. Maintenance of this small distance is obviously established by the use of spacers 8 of the appropriate thickness, e.g. 0.1 mm, and is dependant upon the planarity of the cooling surface and the glass plate over the dimensions of the entire gel surface. Thus a thick and inflexible glass plate 3 is used, and the cooling surface is manufactured within appropriate tolerance specifications. Obviously, the glass plate 3 is not machined at the edges where it contacts the spacers 8, and materials other than glass could be employed for component 3. Additionally depicted in the Figures are the positions of cathodic 9 and anodic 10 buffer reservoirs. A typical size for the separating gel produced by such a system is 500 mm x 500 mm x 0.1 mm. Due to extended buffering requirements for these large gels, an optimal system involves recirculating buffer between anodic and cathodic chamber by means of e.g. a peristaltic pump, in a manner which will be obvious to experts in the art.

During preparation of the gel the device is cooled to a temperature of about e.g. 4°C to retard polymerisation of the gel matrix. This is especially important when gradients are to be poured. After finishing the pouring step, the device is heated to a temperature of e.g. 50°C ensuring an excellent and reproducible polymerisation of the gel matrix.

After having performed the electrophoretic separation of the analytes, especially proteins, the gel is dried e.g. by a flow of warm air. Optionally, prior to drying the gel is fixed and/or stained according to standard procedures. If the analytes are radioactively labelled, the gel, especially the dried gel, is subjected to isotopic detection. The separation pattern is analysed and certain regions, representing the molecules of interest, are defined. A solution, especially a buffer, is applied on the defined regions in order to rehydrate said regions of the dried gel. The covalent bonding between the defined regions of the gel and the support is decoupled by application of an appropriate agent, e.g. a reducing agent. This agent is preferably contained in the solution used for rehydration. After decoupling the connection between gel and support the defined regions are removed by e.g. mechanical stamping out and subjected to further analysis like peptide sequencing or mass analysis. The application of solutions and/or the removing of the gel is performed manually or, as it is especially preferred, by an automated system.

### REFERENCES

1. Andrews, A. T. 1986. Electrophoresis : Theory, Techniques, and Biochemical and Clinical Applications, 2nd Ed. (Dec 1986) ed. Oxford University Press. ISBN 0198546327.
2. Borrebaeck, C. A. 1998. Tapping the potential of molecular libraries in functional genomics. Immunol Today 19:524-7.
3. Cavalcoli, J. D., R. A. VanBogelen, P. C. Andrews, and B. Moldover. 1997. Unique identification of proteins from small genome organisms: theoretical feasibility of high throughput proteome analysis. Electrophoresis 18:2703-8.
4. Fey, S. J., A. Nawrocki, M. R. Larsen, A. Gorg, P. Roepstorff, G. N. Skews, R. Williams, and P. M. Larsen. 1997. Proteome analysis of Saccharomyces cerevisiae: a methodological outline. Electrophoresis 18:1361-72.
5. Görg, A., W. Postel, and S. Günther. 1988. The current state of two dimensional electrophoresis with immobilised pH gradients. Electrophoresis 9:531-546.
6. Gorg, A., W. Postel, R. Westermeier, E. Gianazza, and P. G. Righetti. 1980. Gel gradient electrophoresis, isoelectric focusing and two-dimensional techniques in horizontal, ultrathin polyacrylamide layers. J Biochem Biophys Methods 3:273-84.
7. Hansen, J. N. 1976. Electrophoresis of ribonucleic acid on a polyacrylamide gel which contains disulfide cross-linkages. Anal Biochem 76:37-44.
8. Jungblut, P., B. Thiede, U. Zimny-Arndt, E. C. Muller, C. Scheler, B. Wittmann-Liebold, and A. Otto. 1996. Resolution power of two-dimensional electrophoresis and identification of proteins from gels. Electrophoresis 17:839-47.
9. Kellner, R. 1994. Chemical and enzymatic fragmentation of proteins, p. 268. In R. Kellner, F. Lottspeich, and F. Meyer (ed.), Microcharacterisation of proteins. John Wiley & Sons, Weinheim.
10. Klose, J., and U. Kobalz. 1995. Two-dimensional electrophoresis of proteins: an updated protocol and implications for a functional analysis of the genome. Electrophoresis 16:1034-1059.
11. Kretzschmar, K. M., and D. R. Wilkie. 1975. The use of the Peltier effect for simple and accurate calibration of thermoelectric devices. Proc R Soc Lond B Biol Sci 190:315-21.
12. Laemmli, U. K. 1970. Cleavage of structural proteins during the assembly of the head of bacteriophage T4. Nature 227:680-5.
13. O'Connell, P. B., and C. J. Brady. 1976. Polyacrylamide gels with modified cross-linkages. Anal Biochem 76:63-73.
14. Righetti, P. G. (eds.). 1990. Immobilised pH gradients: theory and methodology, vol. 20. Elsevier, Amsterdam.
15. Righetti, P. G., A. Bossi, E. Wenisch, and G. Orsini. 1997. Protein purification in multicompartment electrolyzers with isoelectric membranes. J Chromatogr B Biomed Sci Appl 699:105-15.
16. Schägger, H., von Jagow, G. 1987. Tricine-sodium dodecyl sulfate-polyacrylamide gel electrophoresis for the separation of proteins in the range from 1 to 100 kDa. Anal. Biochem. 166:368-379.
17. Wasinger, V. C., S. J. Cordwell, A. Cerpa-Poljak, J. X. Yan, A. A. Gooley, M. R. Wilkins, M. W. Duncan, R. Harris, K. L. Williams, and I. Humphery-Smith. 1995. Progress with gene-product mapping of the Mollicutes: Mycoplasma genitalium. Electrophoresis 16:1090-4.
18. Weber, G., and P. Bocek. 1998. Stability of continuous flow electrophoresis. Electrophoresis 19:3094-5.
19. Westermeier, R. 1977. Electrophoresis in Practice : A Guide to Methods and Applications of DNA and Protein Separations, 2n ed. John Wiley and Sons, Weinhem. ISBN 3527300708.
20. Wilkins, M. R., K. L. Williams, R. D. Appel, and D. F. Hochstrasser (eds.). 1997. Proteome Research: New Frontiers in Functional Genomics. Springer, Berlin.

## Claims

1. Method for separation of mixtures of molecules, especially mixtures of peptides and/or proteins, into components by gel electrophoresis in which the gel is reversibly coupled to a support, especially a support film, by covalent bonding, comprising
a) electrophoretic separation of the mixture,
b) decoupling at least part of the covalent bonding between the gel and support, especially between defined regions of the gel and support, and
c) removing the gel, especially defined regions of the gel, from the support.

2. Method according to claim 1, characterized in that the gel is a polyacrylamide gel.

3. Method according to claim 1 or 2, characterized in that after electrophoretic separation the gel is dried.

4. Method according to one of the preceding claims, characterized in that the support comprises molecules, which build up the covalent bonding between gel and support and possess cleavable linkages.

5. Method according to claim 4, characterized in that said cleavable linkages are at least one out of the group comprising periodate cleavable bonds, pH reversible bonds, oxidation labile bonds, enzymatically cleavable bonds, cyanogen bromide cleavable bonds and preferably photolabile bonds, wherein the bonds are preferably disulfide bonds.

6. Method according to claim 4 or 5, characterized in that said molecules are acrylamide-like molecules, especially molecules out of the group comprising amino alkyl acrylamides, oxy-alkyl acrylic acids, gamma-methacrylamido-N-alkyl molecules and gamma-methacryl-oxy-alkyl molecules.

7. Method according to one of the preceding claims, characterized in that decoupling of covalent bonding according to step b) is achieved by physical or chemical treatment of defined regions of the gel, preferably by exposing to appropriate light dosage or by application of appropriate solutions, especially buffer solutions, containing e.g. at least one reducing agent.

8. Method according to one of the preceding claims, characterized in that removing of defined regions of the gel according to step c) is performed manually and/or by robotic means, wherein removing by robotic means is preferred.

9. Method according to one of the preceding claims, characterized in that at least the electrophoretic separation according to step a) is thermoregulated by the use of a thermoregulatory device, preferably by the use of a Peltier element.

10. Method according to one of the preceding claims, characterized in that the gel has a surface area of more than 800 cm², especially more than 1000 cm² and preferably more than 2000 cm².

11. Method according to one of the preceding claims, characterized in that the gel has a thickness of less than 1 mm, especially less than 0.3 mm and preferably between 0.1 mm and 0.25 mm.

12. Method according to one of the preceding claims, characterized in that the gel is formed by a stacking gel as upper part and a separation gel as the lower part, wherein preferably the upper part of the gel is wedge-like formed towards the lower part.

13. Device for separation of mixtures of molecules, especially mixtures of peptides and/or proteins, into components by gel electrophoresis, comprising a gel and a support, wherein gel and support are reversibly coupled to each other by covalent bonding, and preferably further characterized by at least one of the features of claim 1 to 12.

14. Device according to claim 13, characterized in that the support, preferably its entire area, is in contact with a thermoregulatory device.

15. Support film, intended to be coupled to a gel for gel electrophoresis, especially a polyacrylamide gel, characterized by comprising molecules, which are intended to be covalently bound to the gel and which possess cleavable linkages.

16. Support film according to claim 15, characterized in that said cleavable linkages are at least one out of the group comprising periodate cleavable bonds, pH reversible bonds, oxidation labile bonds, enzymatically cleavable bonds, cyanogen bromide cleavable bonds and preferably photolabile bonds, wherein the bonds are preferably disulfide bonds.

17. Support film according to claim 15 or 16, characterized in that said molecules are acrylamide-like molecules, especially molecules out of the group comprising amino alkyl acrylamides, oxy-alkyl acrylic acids, gamma-methacrylamido-N-alkyl molecules and gamma-methacryl-oxy-alkyl molecules.

18. Gel coupled to a support for electrophoresis of peptides and/or proteins, characterized by a gel thickness of less than 1 mm, especially less than 0.3 mm, preferably between 0.1 mm and 0.25 mm and a surface area of more than 800 cm², especially more than 1000 cm² and preferably more than 2000 cm², wherein preferably the gel is further characterized by at least one feature of the claims 2 to 8 and 16 to 17.
